(19) **Europäisches Patentamt**

**European Patent Office**

**Office européen des brevets**

(11) **EP 1 107 528 B1**

(12) **FASCICULE DE BREVET EUROPEEN**

(45) Date de publication et mention
de la délivrance du brevet:
**16.11.2005 Bulletin 2005/46**

(51) Int Cl.⁷: **H04L 25/03**

(21) Numéro de dépôt: **00204219.0**

(22) Date de dépôt: **28.11.2000**

(54) **Méthode de détection de blocs pour canal soumis à évanouissement**

Verfahren der Erkennung von Blöcken für einen schwindenden Kanal

Method of detection of blocks for channel subjected to fading

(84) Etats contractants désignés:
**DE FR GB IT**

(30) Priorité: **07.12.1999 FR 9915416**

(43) Date de publication de la demande:
**13.06.2001 Bulletin 2001/24**

(73) Titulaire: **Koninklijke Philips Electronics N.V.**
**5621 BA Eindhoven (NL)**

(72) Inventeur: **Chouly, Antoine, Société Civile S.P.I.D.**
**75008 Paris (FR)**

(74) Mandataire: **Charpail, François et al**
**Société Civile S.P.I.D.**
**156, Boulevard Haussmann**
**75008 Paris (FR)**

(56) Documents cités:
**US-A- 5 812 947**

- **REINHARDT M ET AL: "TRANSFORMATION OF ARAYLEIGH FADING CHANNEL INTO A SET OF PARALLEL AWGN CHANNELS AND ITS ADVANTAGE FOR CODED TRANSMISSION" ELECTRONICS LETTERS,GB,IEE STEVENAGE, vol. 31, no. 25, 7 décembre 1995 (1995-12-07), pages 2154-2155, XP000546787 ISSN: 0013-5194**

**Description**

<u>Domaine de l'invention</u>

L'invention concerne un système de transmission comportant au moins un émetteur et un récepteur pour transmettre des données formatées en blocs au travers d'un canal de transmission qui introduit une distorsion définie à partir de coefficients multiplicatifs, ledit récepteur comportant des moyens de détection de blocs par itérations successives, lesdits moyens de détection comportant eux-mêmes des moyens de multiplication de blocs par une matrice de filtrage destinée à compenser ladite distorsion.

L'invention concerne également un récepteur destiné à être utilisé dans un tel système, une méthode de détection de blocs destinée à être utilisé dans un tel récepteur, et un programme d'ordinateur pour la mise en oeuvre d'une telle méthode.

L'invention a d'importantes applications dans le domaine des transmissions par l'intermédiaire d'un canal soumis à évanouissement, par exemple un canal de Rayleigh ou de Rice. C'est le cas par exemple des systèmes de radio mobile et des systèmes de transmission par satellite mobile.

<u>Arrière plan technologique de l'invention</u>

Un tel système de transmission est notamment décrit dans l'article « Transformation of a Rayleigh fading channel into a set of parallel AWGN channels and its advantage for coded transmission » de M. Reinhardt et J. Lindner, publié dans la revue Electronics Letters vol.31, n°25, le 7 décembre 1995.

Dans le système décrit dans cet article, les blocs reçus sont multipliés par une matrice de filtrage dont les éléments s'écrivent $\dfrac{\rho_j{}^*}{E(\rho_j{}^2) + N_0}$ où $\rho_j{}^*, j=1,..., M$ sont les conjugués des coefficients $p_j$ du canal, M est la taille du bloc, $E(\rho_j{}^2)$ est l'espérance des $\rho_j{}^2$, et $N_0$ est la variance du bruit gaussien.

Dans la pratique, ce système a de bonnes performances pour des modulations du type QPSK. Mais les performances sont insuffisantes pour les modulations de type QAM, et pour les modulations de type PSK ayant un plus grand nombre de points.

L'invention a pour but de proposer un système de transmission du genre précité, ayant de meilleures performances.

<u>Résumé de l'invention</u>

Ce but est atteint avec un système tel que décrit dans le paragraphe introductif et caractérisé en ce que les éléments de la matrice de filtrage sont constitués à partir d'une puissance du module desdits coefficients, la valeur de ladite puissance étant fonction de l'itération.

Les valeurs desdites puissances sont par exemple choisies en appliquant un critère de minimisation d'erreur.

Dans un premier mode de réalisation, le nombre d'itérations est fixe. Dans un second mode de réalisation, le détecteur comporte des moyens pour déterminer la convergence des décisions obtenues lors des itérations successives, et des moyens pour terminer la détection lorsque la convergence est déterminée. Ce second mode de réalisation permet en moyenne de limiter le nombre d'itérations nécessaires pour se rapprocher des performances obtenues avec un canal gaussien (c'est-à-dire d'un canal qui n'est pas soumis à évanouissement).

<u>Brève description des dessins</u>

L'invention sera mieux comprise et d'autres détails apparaîtront dans la description qui va suivre en regard des dessins annexés donnés à titre d'exemples non limitatifs et dans lesquels :

- la figure 1 représente un exemple de système selon l'invention,
- la figure 2 représente un exemple détaillé d'un récepteur selon l'invention,
- la figure 3 présente les résultats obtenus avec l'invention dans le cas d'une modulation 16QAM non codée et d'une transformée d'Hadamard d'ordre 12.

<u>Description d'un mode de réalisation préférentiel</u>

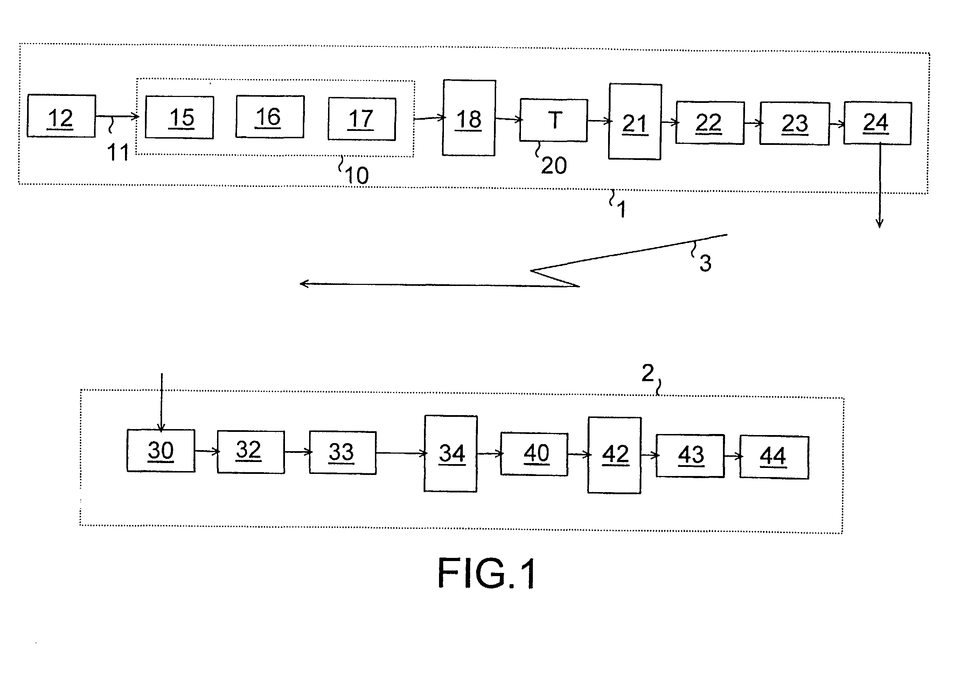

Sur la figure 1, on a représenté un exemple de système de transmission selon l'invention. Ce système comporte un émetteur 1 susceptible de transmettre des données vers un récepteur 2, par l'intermédiaire d'un canal radio 3 soumis à évanouissement.

L'émetteur 1 comporte des moyens de codage de canal 10 pour coder un flux binaire 11 fourni par une source de données 12. Les moyens de codage de canal 10 comportent un codeur 15 qui introduit de la redondance sur les données 12, un dispositif d'affectation 16 qui affecte à un groupe de bits un symbole choisi dans une constellation, et un entrelaceur 17 qui permet d'éviter la présence de paquets d'erreur au niveau du décodage. Les symboles délivrés par l'entrelaceur 17 sont fournis à un convertisseur série / parallèle 18 qui groupe les symboles en blocs X de longueur M. Ces blocs sont transmis à des moyens 20 de transformation orthogonale. Les moyens 20 de transformation orthogonale transforment les blocs X en blocs Y en multipliant le vecteur $X = [X_1, X_2, ..., X_M]^t$ (où t indique la transposée) par une matrice orthogonale T. Les vecteurs de sortie Y s'écrivent donc $Y = TX$. A titre d'exemple, on utilise une transformée de Fourier discrète, ou une transformée de Hadamard. Les vecteur de sortie Y sont ensuite transmis à un convertisseur parallèle / série 21. Le flux de symboles obtenu est entrelacé par un entrelaceur 22 de façon à garantir que les facteurs d'atténuation qui seront introduits sur les symboles par le canal soient indépendants les uns des autres. Les symboles délivrés par l'entrelaceur 22 sont filtrés par un filtre passe-bas 23 puis modulés par un modulateur 24. Le signal radio obtenu est transmis par le canal radio 3 qui est soumis à évanouissement.

Le récepteur 2 comporte des moyens de démodulation 30 pour démoduler un signal radio reçu. Ces moyens de démodulation 30 comportent en outre des moyens d'estimation et de compensation de phase, de telle sorte qu'il n'y a pas de différence de phase entre les symboles émis et les symboles obtenus en sortie des moyens de démodulation.

Le symboles obtenus en sortie des moyens de démodulation sont filtrés par un filtre passe-bas 32, puis transmis à un désentrelaceur 33. Les symboles désentrelacés sont transmis à un convertisseur série / parallèle 34 qui délivrent des blocs Z de longueur M. Ces blocs Z sont transmis à un détecteur itératif de blocs 40. A la fin de la dernière itération (i=L), le détecteur 40 délivre des blocs $\tilde{x}(L)$. Ces blocs $\tilde{x}(L)$ sont transmis à un convertisseur parallèle / série 42. Le flux de symboles obtenus est transmis à un désentrelaceur 43, puis à un décodeur 44. Après décodage, le décodeur 44 prend des décisions finales sur les symboles reçus.

Le canal de transmission multiplie chaque symbole transmis par un coefficient, et ajoute un bruit gaussien. Pour un bloc transmis Y, le canal est donc caractérisé par une matrice diagonale $D\rho = diag(\rho_1, ..., \rho_M)$, et un vecteur bruit N. Le bloc Z reçu à l'entrée du détecteur 40 s'écrit donc $Z = DpY + N$. Grâce à l'entrelacement 22 effectué avant la transmission, les coefficients $\rho_j$ sont des variables indépendantes. Elles sont par exemple distribuées selon une loi de Rayleigh ou de Rice. Lorsqu'il n'y a pas de différence de phase entre les symboles émis et les symboles appliqués à l'entrée du détecteur 40, les coefficients $\rho_j$ sont des nombres réels.

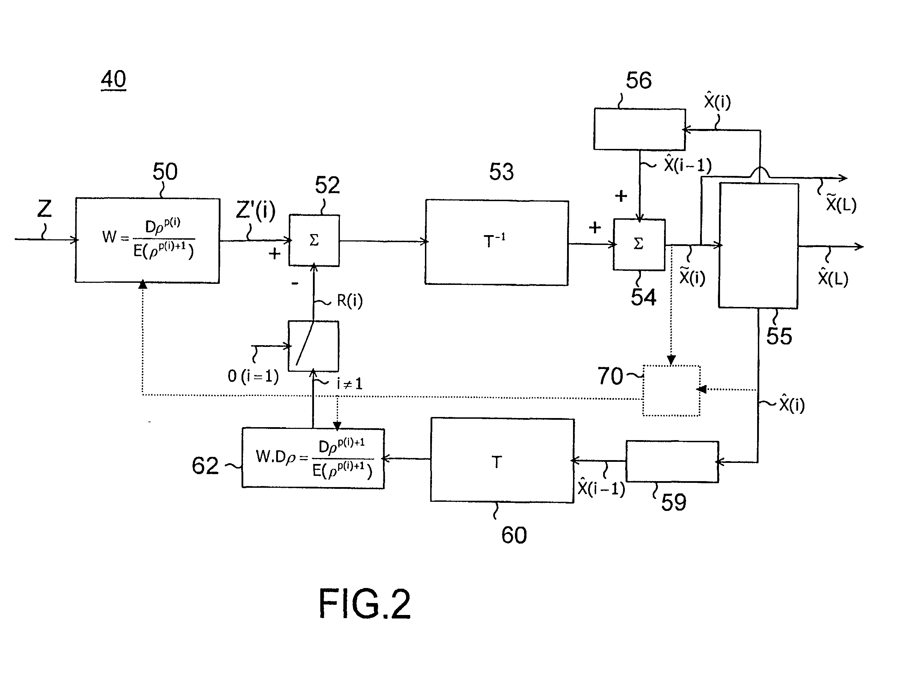

Sur la figure 2, on a explicité le fonctionnement du détecteur 40 en utilisant une représentation par blocs. Le détecteur 40 a un fonctionnement itératif. Dans la suite de la description, l'indice i (i=1, ..., L) est un compteur d'itération. Le détecteur 40 comporte des moyens de filtrage 50 qui multiplient les blocs reçus Z par une matrice de filtrage W(i)

$$= \frac{D_\rho{}^{p(i)}}{E(_\rho{}^{p(i)+1})} \text{ où } D_\rho{}^{p(i)} = diag(\rho_1{}^{p(i)}, ..., \rho_M{}^{p(i)}),$$ $E(_\rho{}^{p(i)+1})$ est l'espérance mathématique des $\rho^{p(i)+1}$, et p(i) est un nombre réel. Les éléments de la matrice de filtrage W(i) et le bloc $Z'(i) = \dfrac{D_\rho{}^{p(i)}}{E(_\rho{}^{p(i)+1})} Z$ délivré par les moyens de filtrage 50 dépendent de l'itération i. La sortie des moyens de filtrage 50 est appliquée à l'entrée d'une boucle composée d'un trajet aller et d'un trajet retour. Sur son trajet aller la boucle comporte un organe de soustraction 52 dont la sortie est reliée à des moyens de transformation inverse 53. La sortie de ces moyens 53 de transformation inverse est appliquée à une première entrée d'un organe de sommation 54. L'organe de sommation 54 a une seconde entrée sur laquelle est portée une décision $\hat{X}(i-1)$ prise lors de l'itération (i-1) (avec $X(0) = [0,...0]^t$). L'organe de sommation 54 élabore un nouveau bloc $\tilde{x}(i)$. A partir de ce nouveau bloc, et tant que i<L, un détecteur à seuil 55 prend une décision $\hat{X}(i)$ pour l'itération i. Lors de la dernière itération (i=L), le nouveau bloc $\tilde{x}_l(L)$ est transmis au convertisseur parallèle / série 42. La décision finale sur chaque symbole reçu est prise par le décodeur 44, à l'issue du décodage.

Le trajet retour comporte des moyens de transformation 60 pour appliquer la transformation définie par la matrice orthogonale T à la décision $\hat{X}(i-1)$ qui a été prise à l'itération i-1. Des moyens de multiplication 62 multiplient ensuite le bloc transformé $T\hat{X}(i-1)$ par le produit de la matrice diagonale $D\rho$ et de la matrice de filtrage W(i). Les moyens de multiplication 62 délivrent donc un bloc

$$R(i) = \frac{[D_\rho{}^{p(i)+1}] \, T\hat{X}(i-1)}{E(\rho^{p(i)+1})}.$$

Finalement, l'organe de soustraction 52 soustrait le bloc R(i) du bloc Z'(i) (avec R(1)=[0,...,0]$^t$).

Ainsi le nouveau bloc $\tilde{X}$(i) s'écrit :

$$\tilde{X}(i) = \hat{X}(i-1) + T^{-1}Z'(i) - T^{-1}\left\{\frac{[D\rho^{p(i)+1}]\, T\, \hat{X}(i-1)}{E(\rho^{p(i)+1})}\right\} + N',$$

où N' est un bruit gaussien.

Le terme

$$T^{-1}Z'(i) - T^{-1}\left\{\frac{[D\rho^{p(i)+1}]\, T\, \hat{X}(i-1)}{E(\rho^{p(i)+1})}\right\}$$

constitue une différence entre le bloc effectivement reçu après filtrage, et le bloc qui aurait été reçu après le même filtrage, pour la décision prise à l'itération précédente. Cette différence est appelée interférence inter-symboles. Elle diminue à chaque itération.

Sur la figure 2, les blocs 56 et 59 représentent des organes de retard capables de délivrer lors de l'itération i les décisions X(i-1) prises lors de l'itération précédente.

Les éléments de la matrice de filtrage W(i) sont proportionnels à une puissance p(i) des coefficients du canal. Dans l'exemple décrit ici, les coefficients du canal sont réels puisque la phase des symboles reçus a été compensée au niveau de la démodulation. Lorsque la phase n'a pas été préalablement compensée, les coefficients du canal sont des nombres complexes, et les éléments de la matrice de filtrage W(i) sont proportionnels à une puissance p(i) du module desdits coefficients.

L'utilisation d'une puissance p(i) $\neq$ 1 permet de réduire beaucoup plus rapidement l'interférence inter-symboles. Mais c'est au détriment d'une amplification du bruit gaussien puisque, du fait de l'opération de filtrage, la variance de N' est alors supérieure à celle de N.

Les puissances p(i) dépendent de la constellation utilisée et du rapport signal à bruit. Elles sont par exemple choisies par simulations, en supposant que les symboles émis sont connus, et en appliquant un critère de minimisation du taux d'erreur binaire, ou de la variance de la différence entre l'entrée du détecteur à seuil$\tilde{X}$(i) et le bloc émis.

De façon particulièrement avantageuse, la valeur de p(L) est choisie égale à 1, et les valeurs des puissances p(i) pour i<L sont choisies égales à une valeur constante $\mu$. Cette valeur constante $\mu$ est par exemple égale à la moyenne de puissances p'(i) obtenues pour chaque itération i=1, ..., L-1 en appliquant l'un des critères de minimisation d'erreur déjà cités. Les puissances p'(i) sont par exemple déterminées de la façon suivante :

- une première série de simulations est effectuée, avec une unique itération, pour déterminer la puissance p'(1) qui minimise le taux d'erreur binaire obtenu à la fin de cette itération, ou qui minimise la variance de la différence entre l'entrée du détecteur à seuil $\tilde{X}$(1) et le bloc émis,
- une seconde série de simulations est effectuée, avec deux itérations, en utilisant la puissance p'(1) fixée lors de la première série de simulations, pour déterminer la puissance p'(2) qui minimise le taux d'erreur obtenu à la fin de la seconde itération, ou qui minimise la variance de la différence entre l'entrée du détecteur à seuil $\tilde{X}$(2) et le bloc émis,
- et ainsi de suite jusqu'à la (L-1)$^{\text{ème}}$ itération.

Il est particulièrement intéressant de choisir une puissance constante pour les itérations 1 à L-1 parce que, dans ce cas, la matrice W(i) est constante pour les itérations 1 à L-1. L'opération de filtrage qui permet d'obtenir Z'(i) n'est donc effectuée qu'une seule fois pour ces itérations, ce qui réduit fortement la complexité des calculs.

Par ailleurs il est particulièrement intéressant de choisir une puissance égale à 1 pour la dernière itération, parce que dans ce cas la variance du bruit gaussien est la même, avant et après le filtrage, ce qui signifie qu'à la dernière itération le filtrage n'entraîne aucune amplification du bruit. Cette solution est optimale puisqu'on obtient ainsi une accélération de la réduction de l'interférence inter-symbole en utilisant des puissances p(i) $\neq$ 1 lors des L-1$^{\text{ème}}$ premières itérations, et que l'on élimine l'effet secondaire d'amplification du bruit gaussien en utilisant p(i)=1 pour la dernière itération.

Dans un mode de réalisation particulièrement avantageux, la boucle du détecteur 40 comporte, sur son trajet retour, un organe de test de convergence 70. Cet organe de test a pour fonction de déterminer la convergence des décisions obtenues lors des itérations successives, afin de terminer la détection lorsque la convergence est atteinte (c'est-à-dire l'interférence inter-symboles est proche de zéro). Dans un premier mode de réalisation, l'organe de test 70 compare les décisions X(i -1) et X(i) prises pour deux itérations successives. Lorsque ces décisions sont identiques une dernière itération est effectuée avec p(i+1)=1. Dans un second mode de réalisation, représenté en pointillés sur la figure 2, l'organe de test calcule l'erreur quadratique moyenne entre la décision à seuil X(i) et le bloc x̃(i) à partir duquel cette décision a été prise, et compare les erreurs quadratiques moyennes calculées sur les M symboles du bloc pour deux décisions successives X(i -1) et X(i). Lorsque la différence entre ces deux erreurs quadratiques moyennes est inférieure à un certain seuil, une dernière itération est effectuée avec p(i+1)=1.

On notera que les éléments de la matrice de filtrage utilisée dans l'invention sont indépendants de la variance $N_O$ du bruit gaussien. La variance $N_O$ du bruit gaussien n'a donc pas à être estimée ici. Ceci est un avantage supplémentaire par rapport à l'art antérieur cité, parce que cela diminue la complexité de calcul, et augmente la précision du résultat.

Dans le mode de réalisation qui a été décrit à titre d'exemple, l'émetteur comporte des moyens de codage de canal 10, et le récepteur comporte des moyens de décodage qui utilisent le bloc x̃(L). Ceci n'est pas limitatif. Dans certains cas, les moyens de décodage de canal utilisent la décision X(L) à la place du bloc x̃(L). Par ailleurs, les moyens de codage de canal sont optionnels, et lorsque l'émetteur ne comporte pas de moyens de codage de canal, la décision finale sur les symboles reçus est prise par le détecteur à seuil 55. Dans ce cas, c'est le bloc X(L) qui est transmis au convertisseur parallèle / série 42.

Dans le mode de réalisation qui a été décrit à titre d'exemple, le produit de la matrice diagonale Dρ et de la matrice de filtrage W(i) est normalisé. Ceci est un choix d'implémentation avantageux qui permet d'obtenir un unique détecteur utilisable aussi bien avec une constellation à enveloppe constante qu'avec une constellation à enveloppe non constante. Dans d'autres modes de réalisation on pourrait utiliser un produit non normalisé, c'est-à-dire avoir une matrice de filtrage W(i) qui présente un facteur de proportionnalité avec les puissances des coefficients du canal qui soit différent de celui qui a été utilisé ici.

Dans le mode de réalisation qui a été décrit à titre d'exemple, on a utilisé un unique détecteur qui traite des symboles complexes. Toutefois, si on utilise une constellation carrée et une transformée réelle (ce qui est le cas de la transformée de Hadamard), on peut aussi utiliser deux détecteurs en parallèle, pour traiter respectivement les parties réelles et les partie imaginaires des symboles complexes.

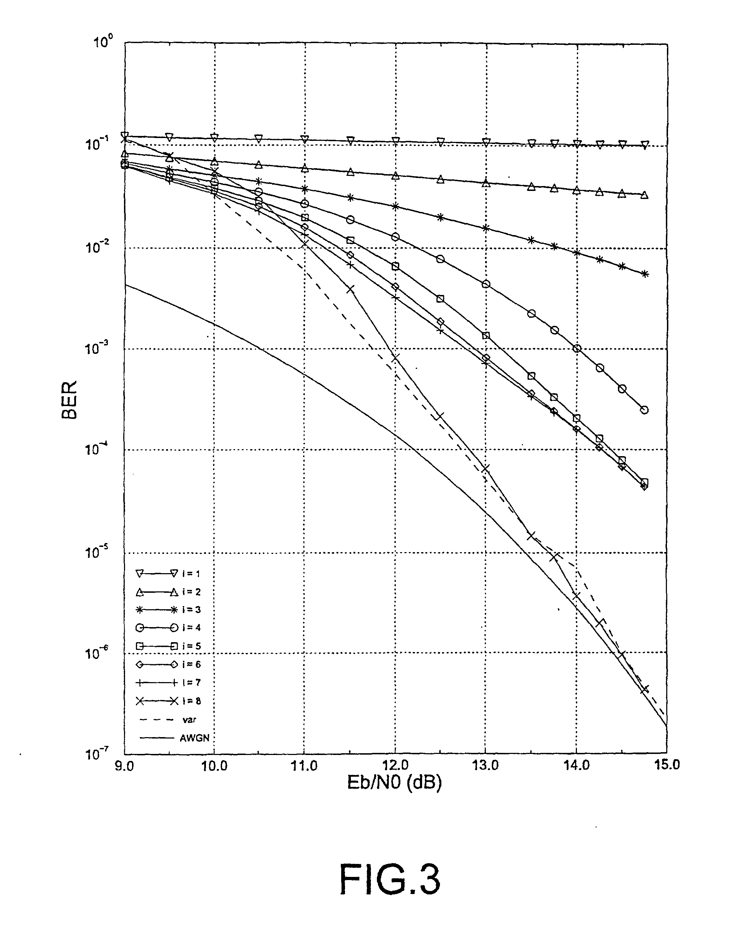

Sur la figure 3 on a représenté des résultats obtenus avec l'invention pour une modulation 16QAM non codée et une transformation d'Hadamard d'ordre 12 (M=4096). Les courbes i=1 à i=8 représentent le taux d'erreur binaire en fonction du rapport signal à bruit pour les itérations 1 à 8 respectivement, avec p(i)=-0,28 pour i=1 à 7 et p(8)=1. La courbe obtenue à la 8$^{ème}$ itération est proche du résultat obtenu avec un canal gaussien (courbe AWGN) pour des rapports signal à bruit supérieurs à 13,5dB.

La courbe VAR représente les résultats obtenus lorsqu'on utilise un nombre d'itérations variable, limité à une valeur maximum de 20 pour des raisons de complexité. Pour les faibles rapports signal à bruit, le nombre d'itérations effectuées est égal à 20. Il diminue lorsque le rapport signal à bruit augmente. Pour de faibles rapports signal à bruit, les résultats obtenus sont meilleurs que lorsqu'on utilise un nombre fixe de 8 itérations. Les courbes i=8 et VAR se rejoignent à partir de 13dB. Le nombre d'itérations à effectuer diminue à partir de 14 ,5dB (il est égal à 7 lorsque Eb/No=14,5dB, et à 6,5 lorsque Eb/No=15dB). Ce mode de réalisation permet donc de réduire la complexité de la détection lorsque le rapport signal à bruit est élevé.

**Revendications**

1. Système de transmission comportant au moins un émetteur (1) et un récepteur (2) pour transmettre des données formatées en blocs au travers d'un canal de transmission (3) qui introduit une distorsion définie à partir de coefficients ($\rho_j$), ledit récepteur comportant des moyens (40) de détection de blocs par itérations successives (i), lesdits moyens de détection comportant eux-mêmes des moyens (50, 62) de multiplication de blocs par une matrice de filtrage (W(i)) destinée à compenser ladite distorsion,
   **caractérisé en ce que** les éléments de la matrice de filtrage sont constitués à partir d'une puissance (p(i)) du module desdits coefficients, la valeur de ladite puissance variant en fonction de l'itération (i).

2. Système de transmission selon la revendication 1, **caractérisé en ce que** les valeurs desdites puissances (p(i)) sont choisies en appliquant un critère de minimisation d'erreur.

3. Système de transmission selon la revendication 1, **caractérisé en ce que** ledit détecteur comporte des moyens (70) pour déterminer la convergence des décisions obtenues lors des itérations successives, et des moyens pour terminer ladite détection lorsque la convergence est déterminée.

**4.** Système de transmission selon la revendication 1, **caractérisé en ce que** lesdits moyens de détection comportent en outre:

- des moyens pour prendre une première décision ($\hat{X}(1)$) sur un bloc reçu (Z),

- des moyens pour déterminer, pour une itération courante (i), une différence entre le bloc effectivement reçu après filtrage (Z'(i)), et le bloc qui aurait été reçu après le même filtrage, pour la décision prise à l'itération précédente (X(i -1) ),

- des moyens pour former un nouveau bloc ($\check{x}(i)$) en ajoutant ladite différence à la décision prise à l'itération précédente (X(i -1)),

- des moyens pour prendre une décision ($\hat{X}(i)$) pour l'itération courante (i), à partir dudit nouveau bloc ($\check{x}X(i)$).

**5.** Récepteur destiné à être utilisé dans un système de transmission selon l'une des revendications 1 à 4.

**6.** Méthode de détection de bloc destinée à être utilisée dans un récepteur d'un système de transmission de données formatées en blocs au travers d'un canal de transmission qui introduit une distorsion définie à partir de coefficients ($\rho_j$), ladite méthode comportant au moins une étape (50, 62) de multiplication de blocs par une matrice de filtrage (W(i)) destinée à compenser ladite distorsion,
**caractérisé en ce que** les éléments de la matrice de filtrage sont constitués à partir d'une puissance (p(i)) du module desdits coefficients, la valeur de ladite puissance variant en fonction de l'itération (i).

**7.** Méthode de détection selon la revendication 6, **caractérisée en ce que** les valeurs desdites puissances (p(i)) sont choisies en appliquant un critère de minimisation d'erreur.

**8.** Méthode de détection selon la revendication 6, **caractérisée en ce qu'**elle comporte une étape (70) de détermination de la convergence des décisions obtenues lors des itérations successives, et une étape pour terminer ladite détection lorsque la convergence est déterminée.

**9.** Méthode de détection selon la revendication 6, **caractérisée en ce qu'**elle comporte en outre :

- une étape pour prendre une première décision sur un bloc reçu,
- une étape pour déterminer, pour une itération courante, une différence entre le bloc effectivement reçu après filtrage (Z'(i)), et le bloc qui aurait été reçu après le même filtrage, pour la décision prise à l'itération précédente (X(i -1) ),
- une étape pour former un nouveau bloc ($\check{x}(i)$) en ajoutant ladite différence à la décision prise à l'itération précédente,
- une étape pour prendre une décision ($\hat{X}(i)$) pour ladite itération courante, à partir dudit nouveau bloc.

**10.** Programme d'ordinateur comportant des moyens pour la mise en oeuvre d'une méthode selon l'une des revendications 6 à 9.

**Patentansprüche**

**1.** Übertragungssystem mit mindestens einem Sender (1) und einem Empfänger (2) für die Übertragung in Blöcken von formatierten Daten über einen Übertragungskanal (3), der eine definierte Verzerrung anhand von multiplikativen Koeffizienten ($\rho_j$) einbringt, wobei der besagte Empfänger Mittel (40) zur Detektion von Blöcken durch aufeinanderfolgende Iterationen (i) aufweist und die besagten Detektionsmittel selbst Mittel (50, 62) zur Multiplikation der Blöcke in einer Filtermatrix (W(i)) aufweisen, die für den Ausgleich der besagten Verzerrung bestimmt sind, **dadurch gekennzeichnet, dass** die Elemente der Filtermatrix anhand einer Potenz (p(i)) des Moduls der besagten Koeffizienten gebildet werden, wobei der Wert der besagten Potenz unter Berücksichtigung der Iteration (i) variiert.

**2.** Übertragungssystem nach Anspruch 1, **dadurch gekennzeichnet, dass** die Werte der besagten Potenzen (p(i)) unter Verwendung eines Kriteriums der Fehlerminimierung gewählt werden.

**3.** Übertragungssystem nach Anspruch 1, **dadurch gekennzeichnet, dass** der besagte Detektor Mittel (70) zur Bestimmung der Konvergenz der während der aufeinanderfolgenden Iterationen erhaltenen Entscheidungen und Mittel zur Beendigung der besagten Detektion enthält, wenn die Konvergenz bestimmt ist.

**4.** Übertragungssystem nach Anspruch 1, **dadurch gekennzeichnet, dass** die besagten Detektionsmittel außerdem enthalten:

- Mittel für das Treffen einer ersten Entscheidung ($\hat{X}$(1)) zu einem erhaltenen Block (Z),
- Mittel zur Bestimmung während einer laufende Iteration (i) einer Differenz zwischen dem nach der Filterung (Z'(i)) tatsächlich erhaltenen Block und dem Block, der bei der vorhergehenden Iteration ($X$(i - 1)) nach derselben Filterung erhalten worden wäre,
- Mittel zur Bildung eines neuen Blocks ($\tilde{x}$(i)) durch Hinzufügung der besagten Differenz zu der bei der vorhergehenden Iteration ($X$(i - 1)) getroffenen Entscheidung,
- Mittel für das Treffen einer Entscheidung ($X$ (i)) bei der laufenden Iteration (i) anhand des besagten neuen Blocks ($\tilde{x}$ (i)).

**5.** Empfänger für die Verwendung in einem Übertragungssystem nach einem der Ansprüche 1 bis 4.

**6.** Verfahren zur Detektion eines Blocks für die Verwendung in einem Empfänger eines Übertragungssystems von in einem Übertragungskanal in Blöcken formatierten Daten, der anhand von Koeffizienten ($\rho_j$) eine definierte Verzerrung einbringt, wobei das besagte Verfahren mindestens einen Schritt (50, 62) zur Multiplikation der Blöcke anhand einer Filtermatrix (W(i)) für den Ausgleich der besagten Verzerrung aufweist, **dadurch gekennzeichnet, dass** die Elemente der Filtermatrix anhand einer Potenz (p(i)) des Moduls der besagten Koeffizienten gebildet werden, wobei der Wert der besagten Potenz unter Berücksichtigung der Iteration (i) variiert.

**7.** Verfahren zur Detektion nach Anspruch 6, **dadurch gekennzeichnet, dass** die Werte der besagten Potenzen (p (i)) unter Verwendung eines Kriteriums zur Fehlerminimierung gewählt werden.

**8.** Verfahren zur Detektion nach Anspruch 6, **dadurch gekennzeichnet, dass** es einen Schritt (70) zur Bestimmung der Konvergenz der während der aufeinanderfolgenden Iterationen und einen Schritt zur Beendigung der besagten Detektion erhaltenen Entscheidungen enthält, wenn die Konvergenz bestimmt ist.

**9.** Verfahren zur Detektion nach Anspruch 6, **dadurch gekennzeichnet, dass** es außerdem enthält:

- einen Schritt für das Treffen einer ersten Entscheidung für einen erhaltenen Block,
- einen Schritt zur Bestimmung bei einer laufende Iteration einer Differenz zwischen dem nach der Filterung (Z'(i)) tatsächlich erhaltenen Block und dem Block, der bei der vorhergehenden Iteration ($X$(i - 1)) nach derselben Filterung erhalten worden wäre,
- einen Schritt zur Bildung eines neuen Blocks ($\tilde{x}$(i)) durch Hinzufügung der besagten Differenz zu der bei der vorhergehenden Iteration getroffenen Entscheidung,
- einen Schritt für das Treffen einer Entscheidng ($X$(i)) für die besagte laufende Iteration anhand des besagten neuen Blocks.

**10.** Computerprogramm mit Mitteln für die Umsetzung eines Verfahrens nach einem der Ansprüche 6 bis 9.

**Claims**

**1.** A transmission system comprising at least a transmitter (1) and a receiver (2) for transmitting data formatted in blocks over a transmission channel (3) which introduces a distortion which is defined on the basis of coefficients ($\rho_j$), said receiver comprising block detection means (40) for detecting blocks by successive iterations (i), said block detection means themselves comprising block multiplier means (50, 62) for multiplying blocks via a filter matrix (W(i)) intended to compensate for said distortion, **characterized in that** the elements of the filter matrix are formed on the basis of a power (p(i)) of the module of said coefficients, the value of said power varying as a function of the iteration (i).

**2.** A transmission system as claimed in claim 1, **characterized in that** the values of said powers (p(i)) are chosen by applying an error minimization criterion.

3. A transmission system as claimed in claim 1, **characterized in that** said detector comprises means (70) for determining the convergence of the decisions obtained at the successive iterations, and means for terminating said detection when the convergence is determined.

4. A transmission system as claimed in claim 1, **characterized in that** said detection means further include:

   - means for making a first decision ($\hat{X}(1)$) on a received block (Z),

   - means for determining for a current iteration (i) a difference between the actually received block after filtering (Z'(i)) and the block that would have been received after the same filtering for the decision made at the preceding iteration (X(i -1)),

   - means for forming a new block ($\tilde{x}(i)$) by adding said difference to the decision made at the preceding iteration (X(i -1)),

   - means for making a decision ($\hat{X}(i)$) for the current iteration (i) based on said new block ($\tilde{x}(i)$).

5. A receiver intended to be used in a transmission system as claimed in one of the claims 1 to 4.

6. A block detection method intended to be used in a receiver of a transmission system for transmitting block-formatted data over a transmission channel which introduces a distortion which is defined on the basis of multiplicative coefficients ($\rho_j$), said method comprising at least a block multiplying step (50, 62) of multiplying blocks via a filter matrix (W(I)) intended to compensate for said distortion,
**characterized in that** the elements of the filter matrix are formed on the basis of a power (p(i)) of the module of said coefficients, the value of said power varying as a function of the iteration (i).

7. A detection method as claimed in claim 6, **characterized in that** the values of said powers (p(i)) are chosen by applying an error minimization criterion.

8. A detection method as claimed in claim 6, **characterized in that** it comprises a step (70) of determining the convergence of the decisions obtained at successive iterations, and a step of terminating said detection when the convergence is determined.

9. A detection method as claimed in claim 6, **characterized in that** it further includes:

   - a step of making a first decision on a received block,
   - a step of determining for a current iteration a difference between the actually received block after filtering (Z'(i)) and the block that would have been received after the same filtering, for the decision made at the preceding iteration (X(i-1)),
   - a step of forming a new block ($\tilde{x}(i)$) by adding said difference to the decision made at the preceding iteration,

   a step of making a decision ($\hat{X}(i)$) for said current iteration, based on said new block.

10. A computer program comprising means for implementing a method as claimed in one of claims 6 to 9.

EP 1 107 528 B1

12

11

15 16 17

10

18

T

20

21 22 23 24

1

3

2

30 32 33 34 40 42 43 44

FIG.1

FIG.2

FIG.3